# EUROPÄISCHE PATENTSCHRIFT

(11) **EP 2 195 229 B1**
(45) Veröffentlichungstag und Bekanntmachung des Hinweises auf die Patenterteilung: **23.10.2013**
(21) Anmeldenummer: 08802165.4
(22) Anmeldetag: 13.09.2008
(51) Int. Cl.: B62D 65/06, B32B 3/02, B32B 7/02, B60R 13/02

(54) **DACHMODUL**
ROOF MODULE
MODULE DE TOIT

(30) Priorität: 26.09.2007 DE 102007046187
(43) Veröffentlichungstag der Anmeldung: 16.06.2010
(73) Patentinhaber: Bayer Intellectual Property GmbH, 40789 Monheim (DE); Webasto AG, 82131 Stockdorf (DE)
(72) Erfinder: SCHLEIERMACHER, Stephan, 50259 Pulheim (DE); FRANKEN, Klaus, 51467 Bergisch Gladbach (DE); MÜLLER, Karsten, 51375 Leverkusen (DE); LIEBIG, Hans-Jürgen, 51375 Leverkusen (DE); MIES, Detlef, 50189 Elsdorf (DE); LEGLER, Dirk, 86947 Weil (DE); WOKÖCK, Jan, 83043 Bad Aibling (DE); KIESEWETTER, Frank, 82110 Germering (DE); KÖLBL, Michael, 82061 Neuried (DE); STEMMER, Thomas, 81371 München (DE)
(74) Vertreter: von Kreisler Selting Werner
(86) Internationale Anmeldenummer: PCT/EP2008/007615
(87) Internationale Veröffentlichungsnummer: WO 2009/043446

(56) Entgegenhaltungen:
- EP-A- 0 995 667
- WO-A-2006/099939

## Beschreibung

Gegenstand der Erfindung ist ein Dachmodul für Kraftfahrzeuge mit einer Außenhaut (a), einer daran anschließenden Materiallage (b), einer Spacer-Schicht (c) und einem randumlaufenden Kunststoffmaterial (d).

EP-A-995 667 und EP-A-1 077 225 beschreiben die Herstellung von Automobilaußenbauteilen, wie Dachmodulen, Motorhauben etc., wobei tiefgezogene eingefärbte thermoplastische Folien oder Metallfolien mit glasfaserverstärktem Polyurethan (PUR) verstärkt werden.

DE-A-100 57 365 beschreibt die Herstellung von faserverstärkten Kunststoff-Sandwichbauteilen mit Zwischenschichtstruktur.

Die tiefgezogenen Folien verlaufen in der Regel exakt nicht nach der Kontur des Formwerkzeugs. Dadurch wird ein Luftpolster zwischen Folie und Formwerkzeug gebildet. Bei vollflächigen Glasfaser (GF)-PUR Eintrag kann die eingeschlossene Luft während des PUR Aufschäumens nicht zwischen der Folie und dem Werkzeug entweichen. Die so eingeschlossene Luft wird partiell komprimiert; der Schäumdruck ist niedriger als der Luftdruck zwischen Folie und Werkzeug; es kommt zur Ausbeulung der Folie in Richtung GF-PUR. Diese Delle bleibt auf der Folienoberfläche nach der Entformung des Bauteils sichtbar.

Die tiefgezogenen Folien aus Thermoplast, Aluminium Coil Coating oder Stahl Coil Coating können auch nach einem weiteren Verfahren verstärkt werden.

Bei diesem Verfahren werden die Folien in das Schäumwerkzeug eingelegt und mit einer Lage GF-PUR im "long fiber injection" (LFI)-PUR Verfahren belegt. In die noch feuchte Reaktionsmischung wird eine Pappwabe eingelegt. (Die Pappwabe kann beidseitig mit Glasvlies beschichtet sein. Die Pappwabe übernimmt die Funktion eines Spacers im Bauteil. Dadurch tritt gegenüber dem klassischen LFI-PUR Verfahren eine Gewichtsreduktion ein.) Nun wird auf die Pappwabe eine zweite Schicht GF-PUR nach dem LFI-PUR Verfahren eingetragen. Nachfolgend wird das Werkzeug geschlossen und die Pappwabe mit dem LFI-PUR in die gewünschte Form gebracht.

Die beispielsweise 12 mm starke Pappwabe wird dabei im Mittelbereich auf ca. 7 mm und im Randbereich auf ca. 2 mm verpresst. Durch den hohen Verpressungsgrad im Randbereich wird die zwischen Folie und Schäumwerkzeug befindliche Luft eingeschlossen und kann beim Schäumprozess nicht entweichen. Dadurch entstehen partielle Luftpolster, welche zur Bildung von Dellen in der Folie führen.

Außerdem ist bei diesem Verfahren die Schwierigkeit, Gewinde-Inserts oder Blecheinleger mit Anschraubpunkten in der Art anzuschäumen, das hohe Ausreißkräfte erreicht werden.

Die Beschnittkante des Bauteils ragt bei dieser Konstruktion im eingebauten Zustand in den Nassbereich des Fahrzeugs. Aufgrund der Kapillarwirkung und Hydrophilie der Pappwabe kann es zu einer unerwünschten Wasseraufnahme des Bauteils kommen. Die feuchte Wabe kann von Mikroben befallen werden, und/oder bei Frost kann das Bauteil auffrieren (Eissprengen); es kommt zur Delamination der Außenbeschichtung und Verstärkung. Dies kann im schlimmsten Falle zu einem drastischen Abfall der mechanischen Eigenschaften führen.

DE 102 44 287 A1 beschreibt ein Verfahren zur Herstellung eines Verbundelementes, das aufgebaut ist aus i) einer Folie und ii) einer Polyurethan enthaltenden Verstärkungsschicht, umfassend die Schritte: A) Einlegen einer Folie (i) in ein geöffnetes Formwerkzeug, B1) Einbringen von Polyurethan-systemkomponenten in das Formwerkzeug auf die eingelegte Folie (i), B2) Einbringen einer Spacer-Schicht in das Formwerkzeug auf die eingetragenen Polyurethansystemkomponenten, B3) Einbringen von Polyurethansystemkomponenten in das Formwerkzeug auf die eingelegte Spacer-Schicht, und C) Schließen des Formwerkzeugs und Reaktion der eingebrachten Polyurethansystemkomponenten zu einem Polyurethan (ii), und D) gegebenenfalls Abtrennen von überstehender Folie, wobei die Abmessungen der Spacer-Schicht so gewählt werden, dass der äußere Rand der Spacer-Schicht innerhalb des Verbundelementes mindestens einen Abstand von 10 mm bis 300 Millimeter (mm), bevorzugt 15 bis 250 mm, mehr bevorzugt 25 bis 220 mm, besonders bevorzugt 40 bis 200 mm, vom Rand des resultierenden Verbundelementes aufweist. Weiterhin ist Gegenstand dieser Schrift ein Verbundelement, aufgebaut aus i) einer Folie und ii) einer Polyurethan enthaltenden Verstärkungsschicht, wobei in die Verstärkungsschicht eine Spacer-Schicht eingebettet ist, das dadurch gekennzeichnet ist, dass die eingebettete Spacer-Schicht mindestens einen horizontalen Abstand von 10 mm bis 300 Millimeter (mm), bevorzugt 15 bis 250 mm, mehr bevorzugt 25 bis 220 mm, besonders bevorzugt 40 bis 200 mm, vom Rand des Verbundelementes aufweist und die Verwendung des Verbundelementes zur Herstellung von dellenfreien Karosserieaußenteilen, insbesondere von dellenfreien Dachmodulen.

Unter dellenfrei im Sinne der DE 102 44 287 A1 wird verstanden, dass bei optischer Betrachtung des hergestellten Verbundelementes keine Unebenheiten, insbesondere keine Erhebungen oder Einbuchtungen der Folie (i) erkennbar sind, das heißt die Folie ist planar auf der Verstärkungsschicht angeordnet. Allerdings sind nach der hier offenbarten technischen Lehre keine Flächen mit hoher optischer Oberflächenqualität (Class A) herstellbar.

WO 2006/09939 A1 betrifft ein Verfahren zur Herstellung von faserverstärkten Verbundbauteilen, bei dem eine äußere Folie mit einer Schicht enthaltend faserverstärktes Polyurethan verbunden wird, das dadurch gekennzeichnet ist, dass a) auf die äußere Folie, welche eine Dicke im Bereich von 0,2 mm bis 5 mm aufweist, zunächst eine elastische Zwischenschicht aufgebracht wird, welche einen Elastizitätsmodul von 0,5 MPa bis 50 MPa und eine Dicke von 0,3 mm bis 6 mm aufweist, und anschließend b) auf die Rückseite der Zwischenschicht mindestens eine weitere Schicht aufgetragen wird, wobei mindestens eine Schicht enthaltend faserverstärktes Polyurethan aufgetragen wird.

Die Aufgabe der vorliegenden Erfindung besteht darin, ein Dachmodul für Kraftfahrzeuge mit großer absoluter Steifigkeit, großer Flächenbelastbarkeit, großer Torsionssteifigkeit in einem großen Temperaturbereich mit einer Class-A-Oberfläche zu verbinden.

Die vorgenannte Aufgabe wird in einer ersten Ausführungsform gelöst durch ein Dachmodul für Fahrzeuge mit
einer Außenhaut (a), **die eine Kunststofffolie, Metallfolie oder eine In-Mould-Coating-Beschichtung umfasst**,
einer an die Außenhaut (a) ganzflächig anschließenden Materiallage (b), deren Temperaturausdehnungskoeffizient sich von der Außenhaut (a) unterscheidet und derart gewählt ist, dass eine Deformation des Verbundes bei einer Temperaturänderung im Bereich von -20 °C bis +80 °C im Wesentlichen unterbleibt,
einer an die Materiallage (b) anschließenden Spacer-Schicht (c) mit einem Kernmaterial, das auf einer oder beiden Hauptoberflächen mit einer Faserverstärkten Polyurethanschicht bedeckt ist,
wobei
die Materiallage (b) randumlaufend auf der der Außenhaut (a) abgewandten Hauptoberfläche frei von der Spacer-Schicht (c) und der **randumlaufende** Bereich mit einem faserverstärkten Kunststoffmaterial (d) bedeckt ist.

Als Außenhaut (a) können allgemein bekannte, insbesondere thermoplastische Folien eingesetzt werden, beispielsweise übliche Folien auf der Basis von Acrylnitril-Butadien-Styrol (ABS), Polymethylmethacrylat (PMMA), Acrylnitril-Styrol-Acrylester (ASA), Polycarbonat (PC), thermoplastischem Polyurethan, Polypropylen, Polyethylen, und/oder Polyvinylchlorid (PVC). Bevorzugt wird als thermoplastische Außenhaut (a) eine Zweischichtfolie, wobei die erste Schicht auf PMMA und die zweite Schicht auf ASA und/oder PC basiert, verwendet.
Setzt man Zweischichtfolie ein, so haften die Polyisocyanat-Polyadditionsprodukte bevorzugt an ASA und/oder ASA/PC.

Als Außenhaut (a) kommen alle üblichen Metallfolien in Betracht, bevorzugt verwendet man eine Aluminiumfolie oder eine Stahlfolie, insbesondere eine sogenanntes Aluminium-Coil-Coating.

Derartige Außenhäute (a) sind kommerziell erhältlich und ihre Herstellung ist allgemein bekannt. Die vorgenannten Folien weisen im Allgemeinen eine Dicke von 0,2 bis 5 mm, bevorzugt von 0,5 bis 1,5 mm auf.

Als äußere Außenhäute (a) werden beispielsweise coextrudierte Folien mit einer Spacer-Schicht aus Polycarbonat oder ABS (Acrylnitril-Butadien-Styrol) und einer Oberflächenschicht aus PMMA (Polymethylmethacrylat) eingesetzt. Möglich sind aber auch Monofolien aus ABS. Sie besitzen bevorzugt einen Elastizitätsmodul oberhalb von 800 MPa, bevorzugt von 1000 MPa bis 100000 MPa so dass ihre Eigensteifigkeit für eine Grundstabilität sorgt, die den Kräften, welche die Materiallage (b) durch eine elastische Verformung ausüben kann, entgegenwirkt.

Alternativ zu den vorgenannten Außenhäute (a) können diese auch sogenannte In-Mould-Coating-Beschichtungen oder Gel-Coat-Beschichtungen umfassen.

Das In-Mould-Coating ist ein Verfahren, mit dem die Lackierung eines Kunststoff-Formteils bereits im Werkzeug durchgeführt wird. Dazu wird ein hochreaktiver 2-Komponenten-Lack mittels geeigneter Lackiertechnik in die Form gebracht. Danach wird in die offene oder geschlossene Form erfindungsgemäß die Materiallage (b) auf Polyurethan-Basis eingebracht. Das Ergebnis ist ein Bauteil (hier Dachmodul) mit Finish-Oberfläche, die je nach Formbeschaffenheit hochglänzend bis matt und strukturiert sein kann.

Aufgrund der chemisch ähnlichen Beschaffenheit zwischen In-Mould-Coating-Schicht (Außenhaut (a)) und Materiallage (b) sowie des zeitnahen Zusammenbringens beider Bestandteile des Dachmoduls, kommt es zu einem starken chemischen und mechanischen Verbund an der Grenzfläche (Stoffschluss). Auch nach Aushärtung der IMC-Schicht ist eine Reparatur und Überlackierung möglich.

Das In-Mould-Coating ist
- hochreaktiv (nach 3 Minuten staubtrocken),
- lösemittelfrei nach VOC-Richtlinie,
- variabel in Farbton und Endhärte,
- chromat- und bleifrei,
- UV-stabil und
- chemikalienbeständig.

Die In-Mould-Coating-Technik impliziert folgende Vorteile:
- Kostenreduzierung durch Verkürzung oder Wegfall einzelner Prozess-Schritte.
- Gute Haftung zwischen Formteiloberfläche und Lack.
- Qualität der Lackoberfläche durch Formbeschaffenheit auf Kundenwunsch abstimmbar.
- Höhere Designfreiheit bei der Formgebung des Bauteils.
- Möglichkeit der Systemanpassung an verschiedenste Basismaterialien und Verfahrensweisen.
- Das Verfahren ist ideal für die Verwendung von Füllstoffen wie gemahlenen Glasfasern und Sisal geeignet.
- Erhebliches Potential besteht in der Realisierung sehr kurzer Reaktions- und Prozesszeiten.

Die Dicke der Außenhaut (a) beträgt in diesem Fall des In-Mould-Coatings 10 bis 100 µm.

Die Dicke der Außenhaut (a) beträgt in dem Fall des Gel-Coats 0,2 mm bis 1,5 mm.

An die Außenhaut (a) schließt sich ganzflächig die Materiallage (b) an, deren Temperaturausdehnungskoeffizient sich von der Außenhaut (a) unterscheidet und derart gewählt ist, dass eine Deformation des Verbundes bei einer Temperaturänderung im Bereich von -20 °C bis +80 °C im Wesentlichen unterbleibt.

Die Aufgabe dieser Materiallage (b) besteht darin, die aus dem unterschiedlichen Ausdehnungsverhalten der Außenhaut (a) und der Spacer-Schicht (c) resultierenden Spannungen so aufzunehmen, dass einerseits die mechanische Festigkeit des Dachmoduls und andererseits die hohe optische Qualität der Außenhaut (a) auch bei mechanischen und thermischen Wechselbeanspruchungen dauerhaft erhalten bleibt.

Die Materiallage (b) muss insbesondere auch die Unebenheiten, die an der Oberfläche der Spacer-Schicht (c) durch die unterschiedlichen Schwindungen der Fasern und der Polymermatrix entstehen, zuverlässig wegpuffern können.

Außerdem soll die Materiallage (b) verhindern, dass sich das Dachmodul aufgrund der unterschiedlichen Schwindung der Außenhaut (a) gegenüber der Spacer-Schicht (c) verbiegt oder beispielsweise aufgrund der stets etwas inhomogenen Verteilung der Faserstrukturen der Spacer-Schicht (c) auf der Oberfläche der Außenhaut (a) durchdrückt. Zudem sollte die Materiallage (b) in der Lage sein, Oberflächenfehler infolge von Lufteinschlüssen in der Faser-verstärkten Spacer-Schicht (c), welche sich unter anderem bei Temperaturwechselbeanspruchungen bemerkbar machen, abzufangen, um ein gutes optisches Erscheinungsbild (Class-A-Oberfläche) zu erreichen.

Eine weitere Funktion der Materiallage (b) besteht darin, beispielsweise bei Verwendung von thermoplastischen Außenhäute (a) Oberflächenfehler durch ihre eingefrorenen, inneren Spannungen, die beispielsweise aus dem Herstellungsprozess oder nachgelagerten Umformprozessen resultieren können, zu vermeiden. Solche inneren Spannungen können bei der Weiterverarbeitung zum fertigen Dachmodul beispielsweise aufgrund erhöhter Temperaturen zum sogenannten Memory-Effekt führen, welcher eine lokale Schwindung verursacht. Die Materiallage (b) muss folglich in der Lage sein, die daraus resultierenden Verschiebungen aufzunehmen, so dass es zu keinen Oberflächendefekten kommt. In diesem Fall könnten auch thermoplastische Außenhäute (a) minderer Qualität verwendet werden.

Erfindungsgemäß trennt die Materiallage (b) nicht nur die Spacer-Schicht (c) von der Außenhaut (a), sondern auch den randumlaufenden Bereich mit Faser-verstärktem Kunststoffmaterial (d), so dass Schwingungen aus dem Innern des Kraftfahrzeuges in geringem Umfang auf die äußere Oberfläche der Außenhaut (a) des Dachmoduls abgeleitet werden.

Die Materiallage (b) ist so gestaltet, dass die maximalen Spannungen in den Grenzschichten infolge der unterschiedlichen Längenänderungen aufgrund der thermischen Schwindung beim Abkühlen und/oder des Reaktionsschwundes sowie der Ausdehnung von Lufteinschlüssen und der lokalen Längenänderungen in der Außenhaut (a) infolge des Memory-Effektes so niedrig sind, dass die Eigensteifigkeit der Außenhaut (a) gewährleistet, dass eine Class-A-Oberfläche entstehen kann. Außerdem sind die Spannungen so niedrig, dass es weder an der Grenzfläche zwischen Außenhaut (a) und Materiallage (b) noch an der Grenzfläche von Spacer-Schicht (c) zur Materiallage (b) zu lokalen Ablösungen kommen kann. Daher weist die Materiallage (b) insbesondere einen Elastizitätsmodul von 0,5 MPa bis 50 MPa, bevorzugt von 1 MPa bis 10 MPa und besonders bevorzugt von 2 MPa bis 5 MPa auf.

Die Materiallage (b) darf außerdem nicht zu dünn sein, da sonst auch sehr elastische Materialien die Spannungen nicht mehr zur Genüge abbauen können. Sie sollte aber auch nicht zu dick sein, da sonst die hydrostatische Versteifung nicht mehr ausreichend wirkt und der gesamte Verbund zu weich werden könnte. Es existiert somit eine optimale Dicke der Materiallage (b). Die Materiallage (b) weist daher eine Dicke von 0,3 mm bis 6 mm, bevorzugt von 1 mm bis 4 mm, besonders bevorzugt von 1,5 mm bis 3 mm auf.

Es ist auch möglich für die Materiallage (b) ein viskoelastisches Material einzusetzen, welches in der Lage ist, Spannungen abzubauen und dennoch eine genügende Festigkeit bietet um die Schichten dauerhaft zu verbinden.

Bei Verwendung einer sehr elastischen Materiallage (b) mit den beschriebenen geringen Werten für den Elastizitätsmodul besteht die Gefahr, dass die äußere Außenhaut (a) bei hohen lokalen Belastungen punktuell spürbar eingedrückt (unerwünschter Softtouch-Effekt) oder sogar überdehnt werden kann. Diese Gefahr besteht insbesondere dann, wenn die Materiallage (b) aufgrund ihrer Kompressibilität möglicherweise eine spürbare Eindrückung der äußeren Außenhaut (a) zulässt, bevor die Steifigkeit der Spacer-Schicht (c) wirksam werden kann.

Daher ist es wichtig, dass die Materiallage (b) aus einem möglichst inkompressiblen Material besteht. Denn wenn die äußere Außenhaut (a) lokal eingedrückt wird, muss die inkompressible Materiallage (b) verdrängt werden, wodurch eine zusätzliche hydrostatische Steifigkeit entsteht. Dieses Materialverhalten wird durch den Kompressionsmodul der Materiallage (b) beschrieben, der insbesondere zwischen 500 MPa und 5000 MPa liegen sollte, bevorzugt bei etwa 1000 MPa bis 2500 MPa und ganz besonders bevorzugt bei etwa 1200 MPa bis 2000 MPa.

Um eine dünne und gleichmäßige Materiallage (b) zu erzeugen, wird diese bevorzugt durch Sprühen auf die in einem Werkzeug befindliche äußere Außenhaut (a) aufgetragen. Dabei hat sich gezeigt, dass die Eigenschaften der Materiallage (b) optimal wirken können, wenn mit dem Sprühauftrag bevorzugt eine gleichmäßige Masseverteilung mit weniger als +/- 10% Abweichung, besonders bevorzugt weniger als +/-5% Abweichung der Masse der Materiallage (b) bezogen auf Flächenelemente von 5 cm² erfolgt, das heißt dass das Gewicht der Materiallage (b) beliebiger Flächenelemente um weniger als +/- 10% bzw. +/- 5 % voneinander abweicht.

Im Fall der Kombination einer äußeren Außenhaut (a), die nach dem In-Mould-Coating-Verfahren hergestellt ist, kommt der Materiallage (b) eine andere Aufgabe zu. Hier ist eine hohe Elastizität eher von Nachteil. Die Aufgabe besteht jedoch insbesondere darin, Glasfasern und sonstige Unebenheiten aus tieferen Materialschichten, insbesondere der Spacer-Schicht (c) von der äußeren Außenhaut (a) zu distanzieren, damit eine Class-A-Oberfläche erzielt werden kann. Dementsprechend sollte die Materiallage (b) hier einen möglichst harten Untergrund für die Lackbeschichtung und eine Feuchtigkeitsbarriere darstellen.

Zur Verbesserung der Haftung zwischen Materiallage (b) und der anschließend aufgebrachten Spacer-Schicht (c), hat sich gezeigt, dass es vorteilhaft ist, dass das Aufbringen der Spacer-Schicht (c) vor Ablauf der vollständigen Abbindezeit der Materiallage (b) erfolgt.
Die Materiallage (b) ist beispielsweise erhältlich durch Umsetzung von
a) organischen Di- und/oder Polyisocyanaten mit
b) mindestens einem Polyetherpolyol mit einer zahlenmittleren Molekularmasse von 800 g/Mol bis 25 000 g/mol, bevorzugt von 800 bis 14 000 g/Mol, besonders bevorzugt 1000 bis 8000 g/mol und mit einer mittleren Funktionalität von 2,4 bis 8, besonders bevorzugt von 2,5 bis 3,5, und
c) gegebenenfalls weiteren von b) verschiedenen Polyetherpolyolen mit einer zahlenmittleren Molekularmasse von 800 g/Mol bis 25 000 g/Mol bevorzugt von 800 bis 14000 g/Mol, besonders bevorzugt 1000 bis 8000 g/mol und mit mittleren Funktionalitäten, von 1,6 bis 2,4, bevorzugt von 1,8 bis 2,4 und
d) gegebenenfalls Polymerpolyolen mit Gehalten von 1 bis 50 Gew.-% an Füllstoffen bezogen auf das Polymerpolyol, und mit OH-Zahlen von 10 bis 149 und mittleren Funktionalitäten von 1,8 bis 8, bevorzugt von 1,8 bis 3,5, und
e) gegebenenfalls Kettenverlängerern mit mittleren Funktionalitäten von 1,8 bis 2,1, vorzugsweise 2, und mit Molekularmassen von 750 g/mol und kleiner, bevorzugt von 18 g/mol bis 400 g/mol, besonders bevorzugt von 60 g/mol bis 300 g/mol und/oder Vernetzern mit mittleren Funktionalitäten von 3 bis 4, vorzugsweise 3, und mit Molekularmassen bis zu 750 g/Mol, bevorzugt von 18 g/Mol bis 400 g/Mol, besonders bevorzugt von 30 g/Mol bis 300 g/Mol,
f) in Gegenwart von Aminkatalysatoren und
g) Metallkatalysatoren und
h) gegebenenfalls Zusatzstoffen.
Bevorzugt werden Polyurethan-Elastomere (PUR-Elastomere) welche in der Materiallage (b) enthalten sind bzw. aus denen die Materiallage (b) besteht nach dem Prepolymerverfahren hergestellt, wobei zweckmäßigerweise im ersten Schritt aus zumindest einem Teil des Polyetherpolyols b) oder dessen Mischung mit Polyolkomponente c) und/oder d) und mindestens einem Di- oder Polyisocyanat a) ein Isocyanatgruppen aufweisendes Polyadditionsaddukt hergestellt wird. Im zweiten Schritt können massive PUR-Elastomere aus derartigen Isocyanatgruppen aufweisenden Prepolymeren durch Umsetzung mit niedermolekularen Kettenverlängerern und/oder Vernetzern e) und/oder dem restlichen Teil der Polyolkomponenten b) und gegebenenfalls c) und/oder d) hergestellt werden. Werden im zweiten Schritt Wasser oder andere Treibmittel oder Mischungen daraus mitverwendet, können mikrozellulare PUR-Elastomere hergestellt werden, wobei deren Kompressionsmodul ebenfalls zwischen 500 und 5000 MPa liegen soll.

Als Ausgangskomponente a) eignen sich aliphatische, cycloaliphatische, araliphatische, aromatische und heterocyclische Polyisocyanate, wie sie beispielsweise von W. Siefken in Justus Liebigs Annalen der Chemie, 562, Seiten 75 bis 136, beschrieben werden. Beispiele sind solche der Formel

Q (NCO)ₙ

in der n = 2, 3 oder 4, vorzugsweise 2 oder 3, besonders bevorzugt 2 bedeutet, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten. Bevorzugt sind Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethylcyclohexan, 2,4- und 2,6-Hexahydrotoluylendiisocyanat sowie beliebige Gemische dieser Isomeren, Hexahydro-1,3- und -1,4-phenylendiisocyanat, Perhydro-2,4'- und -4,4'-diphenylmethan-diisocyanat, 1,3-und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI) oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Kondensation von Anilin mit Formaldehyd und anschließende Phosgenierung erhalten und beispielsweise in GB-A 874 430 und GB-A 848 671 beschrieben werden und p-Isocyanatophenylsulfonylisocyanate gemäss US-PS 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, DE-A 25 37 685 und DE-A 25 52 350 beschrieben werden, Norbornandiisocyanate gemäss US-A 3 492 301, Allophanatgruppen aufweisende Polyisocyanate, wie sie in GB-A 994 890, BE-A 761 626 und NL-A 7 102 524 beschrieben werden, Isocyanuratgruppen aufweisende Polyisocyanate, wie sie in US-A 3 001 9731, in DE-A 10 22 789, DE-A 1222 067 und DE-A 1 027 394 sowie in DE-A 1 929 034 und DE-A 2 004 048 beschrieben werden, Urethangruppen aufweisende Polyisocyanate, wie sie beispielsweise in der BE-A 752 261 oder in US-A 3 394 164 und DE-A 3 644 457 beschrieben werden, acylierte Harnstoffgruppen aufweisende Polyisocyanate gemäss DE-A 1 230 778, Biuretgruppen aufweisende Polyisocyanate, wie sie in US-A 3 124 605, US-A 3 201 372 und US-A 3 124 605 sowie in GB-A 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-A 965 474 und GB-A 1 072 956, in US-A 3 567 763 und in DE-A 12 31 688 genannt werden, Umsetzungsprodukte der obengenannten Isocyanate mit Acetalen gemäss DE-A 1 072 385 und polymere Fettsäureester enthaltende Polyisocyanate gemäss US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylenpolyisocyanate, die durch Kondensation von Anilin mit Formaldehyd und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren Isocyanatgruppen aufweisende Prepolymere verwendet, die hergestellt werden durch Umsetzung mindestens einer Teilmenge der Polyolkomponente b) und/oder c) und/oder Kettenverlängerer und/oder Vernetzer e) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 6 bis 25 Gew.-%, vorzugsweise von 8 bis 20 Gew.-%.

Wie bereits oben ausgeführt wurde, können zur Herstellung der Isocyanatgruppen-haltigen Prepolymeren Mischungen aus b), c), d) und e) verwendet werden. Nach einer bevorzugt angewandten Ausführungsform werden die Isocyanatgruppen enthaltenden Prepolymere jedoch ohne Kettenverlängerer bzw. Vernetzer e) hergestellt.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und die Katalysatoren der Reaktionsmischung erst zur Herstellung der PUR-Elastomere zuzugeben.

Geeignete Polyetherpolyole b) oder c) für die Herstellung der erfindungsgemäßen Elastomere können nach bekannten Verfahren hergestellt werden, beispielsweise durch Polyinsertion über die DMC-Katalyse von Alkylenoxiden, durch anionische Polymerisation von Alkylenoxiden in Gegenwart von Alkalihydroxiden oder Alkalialkoholaten als Katalysatoren und unter Zusatz mindestens eines Startermoleküls, das 2 bis 6, bevorzugt 2 bis 4 reaktive Wasserstoffatome gebunden enthält, oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermolekül kommen Wasser oder 2- und 3-wertige Alkohole in Betracht, wie beispielsweise Ethylenglykol, 1,2-Propandiol und 1,3-Propandiol, Diethylenglykol, Dipropylenglykol, Ethandiol-1,4, Glycerin, Trimethylolpropan.

Geeignete Polyetherpolyole, vorzugsweise Polyoxypropylenpolyoxyethylen-polyole, besitzen mittlere Funktionalitäten von 2,4 bis 8, besonders bevorzugt von 2,5 bis 3,5 (für Polyetherpolyole b)) bzw. mittlere Funktionalitäten von 1,6 bis 2,4, bevorzugt 1,8 bis 2,4 (für Polyetherpolyole c)) und zahlenmittlere Molekularmassen von 800 g/Mol bis 25 000 g/Mol, bevorzugt von 800 bis 14 000 g/Mol, besonders bevorzugt von 1 000 bis 8 000 g/Mol (für Polyetherpolyole b) und c)).

Als Polymerpolyole d) eignen sich außer den o.g. Polyetherpolyolen auch polymermodifizierte Polyetherpolyole, vorzugsweise Pfropfpolyetherpolyole, insbesondere solche auf Styrol und/oder Acrylnitrilbasis, die durch in situ Polymerisation von Acrylnitril, Styrol oder vorzugsweise Mischungen aus Styrol und Acrylnitril, beispielsweise im Gewichtsverhältnis 90:10 bis 10:90, vorzugsweise 70:30 bis 30:70, hergestellt werden, sowie Polyetherpolyol-Dispersionen, die als disperse Phase - üblicherweise in Mengen von 1 bis 50 Gew.-%, vorzugsweise 1 bis 45 Gew.-%, bezogen auf den Polyether - beispielsweise anorganische Füllstoffe, Polyharnstoffe (PHD), Polyhydrazide, tert.-Aminogruppen gebunden enthaltende Polyurethane und/oder Melamin enthalten.

Bevorzugt werden bei der Herstellung di- und trifunktionelle Polyetherpolyole mit einem zahlenmittleren Molekulargewicht von 800 bis 25 000, vorzugsweise von 800 bis 14 000 g/Mol, besonders bevorzugt von 1 000 bis 8000 g/Mol als Komponenten b) oder c) eingesetzt.

Zur Herstellung der Elastomeren können zusätzlich als Komponente e) niedermolekulare difunktionelle Kettenverlängerer, tri- oder tetrafunktionelle Vernetzer oder Mischungen aus Kettenverlängerern und Vernetzern verwendet werden.

Derartige Kettenverlängerer und Vernetzer e) werden zur Modifizierung der mechanischen Eigenschaften, insbesondere der Härte der PUR-Elastomeren eingesetzt. Geeignete Kettenverlängerer wie Alkandiole, Dialkylenglykole und Polyalkylenpolyole und Vernetzungsmittel, wie beispielsweise 3-oder 4-wertige Alkohole und oligomere Polyalkylenpolyole mit einer Funktionalität von 3 bis 4, besitzen üblicherweise Molekularmassen < 750 g/Mol, vorzugsweise von 18 bis 400 g/Mol besonders bevorzugt von 60 bis 300 g/Mol. Als Kettenverlängerer werden vorzugsweise Alkandiole mit 2 bis 12, vorzugsweise 2, 4 oder 6 Kohlenstoffatomen, beispielsweise Ethandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, beispielsweise Diethylengykol und Dipropylengykol sowie Polyoxyalkylenglykole verwendet. Geeignet sind auch verzweigtkettige und/oder ungesättigte Alkandiole mit üblicherweise nicht mehr als 12 Kohlenstoffatomen, wie beispielsweise 1,2-Propandiol, 2- Methyl-1,3-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie beispielsweise Terephthalsäure-bisethylenglykol oder Terephthalsäure-bis-1,4-butandiol, Hydroxyalkylenether des Hydrochinons oder Resorcins, beispielsweise 1,4-Di-(β-Hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, beispielsweise N-Methyl und N-Ethyldiethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl und N,N'-Dicyclohexyl-, (p- bzw. m-)-Phenylendiamin, N,N'-Dimethyl-, N,N'-Diethyl-, N,N'-Diisopropyl-, N,N'-Di-sec.-butyl-, N,N'-Dicyclohexyl-, -4,4'-diaminodiphenylmethan, N,N'-Di-sec.-butylbenzidin, Methylen-bis(4-amino-3-benzoesäuremethylester), 2,4-Chlor-4,4'-diamino-diphenylmethan, 2,4-und 2,6-Toluylendiamin.

Die Verbindungen der Komponente e) können in Form von Mischungen oder einzeln eingesetzt werden. Verwendbar sind auch Gemische aus Kettenverlängerern und Vernetzern.

Zur Einstellung der Härte der PUR-Elastomeren können die Aufbaukomponenten b), c), d) und e) in relativ breiten Mengenverhältnissen variiert werden, wobei die Härte mit zunehmendem Gehalt an Komponente e) in der Reaktionsmischung ansteigt.

Zum Erhalt einer gewünschten Härte des PUR-Elastomeren können die erforderlichen Mengen der Aufbaukomponenten b), c), d) und e) auf einfache Weise experimentell bestimmt werden. Vorteilhafterweise verwendet werden 1 bis 50 Gew.-Teile, vorzugsweise 2,5 bis 20 Gew.-Teile des Kettenverlängerers und/oder Vernetzers e), bezogen auf 100 Gew.-Teile der höhermolekularen Verbindungen b), c) und d) verwendet.

Als Komponente f) können dem Fachmann geläufige Aminkatalysatoren eingesetzt werden, beispielsweise tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-A 26 24 527 und DE-A 26 24 528), 1,4-Diaza-bicyclo-[2,2,2]-octan, N-Methyl-N'-dimethylaminoethyl-piperazin, Bis-(dimethylaminoalkyl)-piperazine, N,N-Dimethylbenzylamin, N,NDimethylcyclohexylamin, N,N-Diethylbenzylamin, Bis-(N,N-diethylaminoethyl)adipat, N,N,N',N'- Tetramethyl-1,3-butandiamin, N,N-Dimethyl-β-phenyl-ethyl-amin, Bis-(dimethylaminopropyl)-harnstoff, Bis-(dimethylaminopropyl)-amin, 1,2-Dimethylimidazol, 2-Methylimidazol, monocyclische und bicyclische Amidine, Bis-(dialkylamino)-alkylether, wie beispielsweise Bis(dimethylaminoethyl)ether, sowie Amidgruppen (vorzugsweise Formamidgruppen) aufweisende tertiäre Amine gemäss DE-A 25 23 633 und DE-A 27 32 292. Als Katalysatoren sind auch an sich bekannte Mannichbasen aus sekundären Aminen, wie Dimethylamin, und Aldehyden, vorzugsweise Formaldehyd, oder Ketone wie Aceton, Methylethylketon oder Cyclohexanon und Phenole, wie Phenol, Nonylphenol oder Bisphenol, geeignet. Gegenüber Isocyanatgruppen aktive Wasserstoffatome aufweisende tertiäre Amine als Katalysator sind beispielsweise Triethanolamin, Triisopropanolamin, N-Methyl-diethanolamin, N-Ethyldiethanolamin, N,N-Dimethyl-ethanolamin, deren Umsetzungsprodukte mit Alkylenoxiden wie Propylenoxid und/oder Ethylenoxid sowie sekundär-tertiäre Amine gemäss DE-A 27 32 292. Als Katalysatoren können ferner Amine mit Kohlenstoff-Silizium-Bindungen, wie sie in US-A 3 620 984 beschrieben sind, eingesetzt werden, beispielsweise 2,2,4-Trimethyl-2-silamorpholin und 1,3-Diethyl-aminomethyl-tetramethyldisiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt.

Erfindungsgemäß können als Metallkatalysatoren g) auch organische Metallverbindungen des Zinns, Titans, Bismuts, insbesondere organische Zinnverbindungen, als zusätzliche Katalysatoren mitverwendet werden. Als organische Zinnverbindungen kommen neben schwefelhaltigen Verbindungen, wie Di-n-Octyl-zinn-mercaptid, vorzugsweise Zinn(II)-salze von Carbonsäuren, wie Zinn(II)-acetat, Zinn(II)-octoat, Zinn(II)-ethylhexoat, Zinn(II)-laurat und Zinn(W)-Verbindungen, beispielsweise Dibutylzinnoxid, Dibutylzinndichlorid, Dibutylzinndiacetat, Dibutylzinndilaurat, Dibutylzinnmaleat oder Dioctylzinndiacetat in Betracht.

Die Reaktionsmischung zur Herstellung der kompakten und zelligen PUR-Elastomeren kann gegebenenfalls mit Zusatzstoffen h) versehen werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen beispielsweise die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im Allgemeinen so aufgebaut, dass ein Copolymerisat aus Ethylenoxid und Propylenoxid mit einem Polydimethylsiloxanrest verbunden ist. Derartige Schaumstabilisatoren sind beispielsweise in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäss DE-A 25 58 523. Geeignet sind auch andere Organopolysiloxane, oxyethylierte Alkylphenole, oxyethylierte Fettalkohole, Paraffinöle, Rizinusöl bzw. Ricinolsäureester, Türkischrotöl, Erdnussöl und Zellregler wie Paraffine, Fettalkohole und Polydimethylsiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen und Fluoralkanresten als Seitengruppen. Die oberflächenaktiven Substanzen werden üblicherweise in Mengen von 0,01 bis 5 Gew. -Teilen, bezogen auf 100 Gew.-Teile der höhermolekularen Polyhydroxylverbindungen b) und c) angewandt. Zugesetzt werden können auch Reaktionsverzögerer, ferner Pigmente oder Farbstoffe und an sich bekannte Flammschutzmittel, ferner Stabilisatoren gegen Alterungs- und Witterungseinflüsse, Weichmacher und fungistatisch und bakteriostatisch wirkende Substanzen.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl Hanser-Verlag, München, 3. Auflage, 1993, S.118 bis 124 beschrieben.

Als Kernmaterial der Spacer-Schicht (c) ist im Allgemeinen jede Schicht geeignet, welche einen Abstand zwischen zwei Polyurethanschichten gewährleistet. Bevorzugt weist das Kernmaterial der Spacer-Schicht (c) eine Dichte auf, die geringer ist als die Dichte einer faserverstärkten Polyurethanschicht(en) als solches. Weiterhin sollte das Kernmaterial der Spacer-Schicht (c) derart aufgebaut sein, dass die erforderlichen mechanischen Werte des resultierenden Dachmoduls eingehalten werden.

Üblicherweise weist das Kernmaterial der Spacer-Schicht (c) eine Dicke von 1 mm bis 20 mm, bevorzugt von 2 mm bis 15 mm, besonders bevorzugt von 5 mm bis 15 mm auf.

Als Kernmaterial der Spacer-Schicht (c) ist im Allgemeinen jede Schicht geeignet, die Abstand zwischen zwei Polyurethanschichten gewährleistet, somit kann das Kernmaterial der Spacer-Schicht (c) auch als Trennschicht bezeichnet werden. Vorteilhafterweise sollte das Kernmaterial der Spacer-Schicht (c) eine derartige Bauweise aufweisen, dass die Stabilität des resultierenden Dachmoduls, beispielsweise die Druckfestigkeit, im Vergleich zu Dachmodulen ohne Spacer-Schicht (c) nicht beeinträchtigt wird. Ebenfalls ist es vorteilhaft, wenn die Spacer-Schicht (c) eine derartige Bauweise aufweist, dass die Dichte des resultierenden Dachmoduls im Vergleich zu Dachmodulen ohne Spacer-Schicht (c) reduziert wird.

In einer bevorzugten Ausführungsform wird die Kernschicht der Spacer-Schicht (c) derart gewählt, dass die Dichte des resultierenden Dachmoduls um im Vergleich zu entsprechenden Dachmodulen ohne Spacer-Schicht (c) mindestens 10 %, besonders bevorzugt um mindestens 15 %, insbesondere um mindestens 20 % verringert wird. Ebenfalls wird in einer bevorzugten Ausführungsform die Spacer-Schicht (c) derart gewählt, dass die Zugfestigkeit und/oder der Zug-E-Modul und/oder der Biege-E-Modul des resultierenden Dachmoduls, im Vergleich zu entsprechenden Dachmodulen ohne Spacer-Schicht (c), um maximal 10 % abnimmt, besonders bevorzugt um mindestens 10 % zunimmt, insbesondere um mindestens 20 % zunimmt. Die physikalischen Kenndaten werden nach vorstehend beschriebenen Normen bestimmt.

Beispiele für geeignete Kernmaterialien der Spacer-Schichten (c) sind Schichten aus expandierbaren Kunststoffe wie EPP, EPC, EPS, sowie Schichten aus Metallen, wie Aluminium oder Magnesium oder Naturwerkstoffschichten, wie Holz, Pappe oder Papier sowie natürliche und künstliche Fasern. Die vorstehend genannten Stoffe liegen zur Erhöhung der Stabilität bevorzugt in nicht glatter Form vor, beispielsweise in Wellblechform oder Wabenform. Bevorzugt werden als Kernmaterial der Spacer-Schicht (c) Pappwaben verwendet. Bevorzugte Wabenschichten bestehen aus Pappe und weisen eine durchschnittliche Wabengröße von ca. 5 mm Durchmesser auf.

In einer bevorzugten Ausführungsform wird als Kernmaterial der Spacer-Schicht (c) eine Pappwabenschicht verwendet, welche auf beiden Seiten mit einer Schicht aus Glasfasern beschichtet ist. Die Glasfaserschicht behindert das Eindringen von Polyurethansystemkomponenten in die einzelnen Pappwaben und weist im allgemeinen eine Dicke von 0,01 mm bis 2 mm, bevorzugt von 0,1 mm bis 1 mm auf, führt jedoch dazu, dass das Polyurethan mit dem Kernmaterial verkleben kann und somit einen festen Verbund liefert.

Das Kernmaterial der Spacer-Schicht (c) enthält auf ihrer Hauptoberfläche faserverstärktes, bevorzugt glasfaserverstärktes Polyurethan und dient als Träger, der dem Dachmodul vorteilhafte mechanische Eigenschaften, wie beispielsweise hohe Festigkeit, verleiht. Unter faserverstärktem Polyurethan versteht man PUR, das Fasern zur Verstärkung enthält. Die Fasern können beispielsweise durch das aus dem Stand der Technik bekannte LFI-Verfahren in die Polyurethansystemkomponenten eingebracht werden und weisen im allgemeinen eine Länge von mehr als 4 mm, bevorzugt von mehr als 10 mm, besonders bevorzugt von 10 mm bis 10 cm auf. Gegebenenfalls ist es auch möglich, die Langfasern oder Endlosglasfasern in Form von Matten, insbesondere Gewirke, Gelege oder Vlies in das Polyurethan einzubringen.

Bei den verwendeten Fasern kann es sich um Glasfasern, Naturfasern, wie beispielsweise Flachs, Jute oder Sisal, Kunstfasern, wie beispielsweise Polyamidfasern, Polyesterfaser, Carbonfasern oder Polyurethanfasern sowie Naturfaser oder Metallfasern handeln. Bevorzugt werden Glasfasern verwendet.

Die Fasern zur Verstärkung werden üblicherweise in einer Menge von 1 bis 90 Gew.-%, bevorzugt von 5 bis 70, mehr bevorzugt von 10 bis 60 und besonders bevorzugt von 10 bis 40 Gew.-%, bezogen auf das Gesamtgewicht der Spacer-Schicht (c) eingesetzt.

Die Spacer-Schicht (c) weist üblicherweise eine Dichte von 0,1 bis 1,3 kg/I, bevorzugt von 0,2 bis 1,1 kg/I, besonders bevorzugt von 0,2 bis 0,8 kg/I. Zur Erreichung dieser Dichte werden kompakte oder zellige Polyurethane eingesetzt, wobei Polyurethanhartschäume bevorzugt verwendet werden.

Die Dicke der Spacer-Schicht (c) in den erfindungsgemäßen Dachmodulen beträgt üblicherweise 0,1 bis 100 mm, bevorzugt 0,5 bis 25 mm, mehr bevorzugt 1 bis 20 mm, besonders bevorzugt 1 bis 10 mm.

Bei den erfindungsgemäßen Dachmodulen liegt bevorzugt Haftung zwischen Materiallage (b) und Spacer-Schicht (c) vor, das heißt die Adhäsion zwischen den Schichten ist bevorzugt größer als die Kohäsion innerhalb einer Schicht.

Die erfindungsgemäß eingesetzten Polyurethane der Spacer-Schicht (c) können aus den gleichen Isocyanatkomponenten (a) oder Polyolkomponenten (b) ausgewählt sein, die eingangs für die Materiallage (b) definiert wurden.

Bevorzugt sind Polyole (b) mit einer Funktionalität von 2 bis 8, insbesondere von 2 bis 4, einer Hydroxylzahl von 20 bis 1000 mg KOH/g, bevorzugt von 25 bis 500 mg KOH/g, sowie 10 bis 100 % primären Hydroxylgruppen. Die Polyole weisen im allgemeinen eine Molekularmasse von 400 bis 10000 g/mol, bevorzugt von 600 bis 6000 g/mol auf. Polyetherpolyole (b) sind aufgrund ihrer höheren Hydrolysestabilität besonders bevorzugt.

In einer bevorzugten Ausführungsform wird ein Gemisch aus mindestens zwei Polyetherpolyolen (b) verwendet, wobei das erste Polyetherpolyol (b) eine OH-Zahl von 20 bis 50, bevorzugt von 25 bis 40, aufweist und das zweite Polyetherpolyol (b) eine OH-Zahl von 100 bis 350, bevorzugt von 180 bis 300, aufweist, wobei im allgemeinen das Gewichtsverhältnis vom ersten zum zweiten Polyetherpolyol (b) 99 : 1 bis 80 : 20 beträgt.

Geeignete Polyetherpolyole (b) werden zumeist durch basisch katalysierte Anlagerung von niederen Alkylenoxiden, insbesondere Ethylenoxid und/oder Propylenoxid, an 2 bis 8-funktionelle, insbesondere 2 bis 4-funktionelle Startsubstanzen, hergestellt. Der Gehalt an primären Hydroxylgruppen kann erreicht werden, indem man die Polyole (b) zum Abschluss mit Ethylenoxid umsetzt.

Als Polyetherpolyole (b) können weiterhin sogenannte niedrig ungesättigte Polyetherole verwendet werden. Unter niedrig ungesättigten Polyolen werden im Rahmen dieser Erfindung insbesondere Polyetheralkohole (b) mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an mindestens difunktionelle Alkohole in Gegenwart von sogenannten Doppelmetallcyanidkatalysatoren hergestellt.

Zu den gegenüber Isocyanaten reaktiven Verbindungen (b) können auch hier Kettenverlängerungs- und/oder Vernetzungsmitteln gehören. Bei den Kettenverlängerungsmitteln handelt es sich überwiegend um zwei- oder drei funktionelle Alkohole mit Molekulargewichten von 60 bis 399, beispielsweise Ethylenglykol, Propylenglykol, Butandiol-1,4, Pentandiol-1,5. Bei den Vernetzungsmitteln handelt es sich um Verbindungen mit den Molekularmassen von 60 bis 499 und 3 oder mehr aktiven H-Atomen, vorzugsweise Aminen und besonders bevorzugt Alkoholen, beispielsweise Glycerin, Trimethylolpropan und/oder Pentaerythrit.

Als Katalysatoren (c) können auch hier übliche Verbindungen eingesetzt werden, welche die Reaktion der Komponente (a) mit der Komponente (b) stark beschleunigen. In Frage kommen beispielsweise tertiäre Amine und/oder organische Metallverbindungen, insbesondere Zinnverbindungen. Bevorzugt werden als Katalysatoren solche eingesetzt, die zu einem möglichst geringen Fogging, das heißt zu einer möglichst geringen Abgabe von flüchtigen Verbindungen aus dem Polyisocyanat-Polyadditionsprodukt führen, beispielsweise tertiäre Amine mit reaktiven Endgruppen und/oder höher siedende Aminkatalysen. Beispielsweise können als Katalysatoren folgende Verbindungen eingesetzt werden: Triethylendiamin, Aminoalkyl- und/oder Aminophenyl-imidazole, zum Beispiel 4-Chlor-2,5-Dimethyl-1-(N-methylaminoethyl)-imidazol, 2-Aminopropyl-4, 5-Dimethoxy-1-methylimidazol, 1-Aminopropyl-2,4,5-tributylimidazol, 1-Aminoethyl-4-hexylimidazol, 1-Aminobutyl-2,5-Dimethylimidazol, 1-(3-Aminopropyl)-2-ethyl-4-methylimidazol, 1-(3-Aminopropyl)imidazol und/oder 1-(3-Aminopropyl)-2-methylimidazol, Zinn-(II) salze von organischen Carbonsäuren, zum Beispiel Zinn-(II)-diacetat, Zinn-(II)-dioctoat, Zinn-(II)-diethylhexoat und Zinn-(II)-dilaurat und Dialkylzinn-(IV)-salzen von organischen Carbonsäuren, beispielsweise Dibutyl-zinndiacetat, Dibutylzinn-dilaurat, Dibutylzinn-maleat und Dioctylzinn-diacetat.

Bei den hier verwendeten Polyurethanen kann es sich um kompaktes oder zelliges Polyurethan handeln. Bevorzugt handelt es sich um zelliges Polyurethan, wobei die Herstellung von zelligem Polyurethan durch Zugabe von Treibmittel erfolgt. Als Treibmittel (d) können hier allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die unterschiedlichen Treibmittel können einzeln oder in beliebigen Mischungen untereinander zum Einsatz kommen. Besonders bevorzugt wird nur Wasser als Treibmittel eingesetzt. Sofern physikalische Treibmittel verwendet werden, ist es bevorzugt, dass diese in einer Menge von < 0,5 Gew.-%, bezogen auf das Gewicht der Komponente (b), eingesetzt werden.

Die Menge der eingesetzten Treibmittel richtet sich nach der angestrebten Dichte der Schaumstoffe.

Die Umsetzung erfolgt gegebenenfalls in Anwesenheit von (e) Hilfs- und/oder Zusatzstoffen, wie beispielsweise Füllstoffen, Zellreglern, Formtrennmittel, Pigmenten, oberflächenaktiven Verbindungen und/oder Stabilisatoren gegen oxidativen, thermischen oder mikrobiellen Abbau oder Alterung.

Zur Herstellung der Polyurethane werden hier im allgemeinen die Polyurethansystemkomponenten, das heißt die Polyisocyanate (a) und die Polyole (b) in solchen Mengen zur Umsetzung gebracht, dass das Äquivalenzverhältnis von NCO-Gruppen von (a) zur Summe der reaktiven Wasserstoffatome von (b) bevorzugt 0,7 bis 1,5:1, besonders bevorzugt 0,9 bis 1,2:1 und insbesondere 1 bis 1,15:1, beträgt.

In einer bevorzugten Ausführungsform wird das Polyurethansystem so eingestellt, dass sich ein geschlossenzelliger oder nur geringfügig offenzelliger Schaumstoff als Polyurethanmatrix bildet, da die Spacer-Schicht (c), insbesondere im Falle einer Pappwabe, gegen Umwelteinflüsse, wie Wasserdampf, Mikrobenbefall abgedichtet werden soll. Bevorzugt weist der verwendete Polyurethanschaumstoff eine Offenzelligkeit von weniger als 50 %, mehr bevorzugt von weniger als 30 %, besonders bevorzugt von 0 bis 10 %, insbesondere von 0 bis 5 %, gemessen nach DIN EN ISO 7231, auf.

Das randumlaufende Kunststoffmaterial (d) besteht vorzugsweise ebenfalls aus faserverstärkten, insbesondere glasfaserverstärkten Polyurethan. Hierbei kann auf die oben beschriebenen Komponenten und Verfahren zur Einbringung zurückgegriffen werden. Besonders bevorzugt im Sinne der vorliegenden Erfindung sind S-RIM oder Langfaser-Injektionsmaterialien.

In einer bevorzugten Ausführungsform der vorliegenden Erfindung beträgt die Dicke des randumlaufenden Kunststoffmaterials (d) 3 mm bis 40 mm und entspricht besonders bevorzugt der Dicke der Spacer-Schicht (c).

Besonders bevorzugt entspricht das Material des randumlaufenden Kunststoffmaterials (d) der letzten Lage der Spacer-Schicht (c) und kann somit gegebenenfalls in einem Arbeitsgang durch abschnittsweise Zumischung von Glasfasern im/am Sprühkopf oder durch Anwendung eines zweiten Sprühkopfes gleichzeitig eingebacht werden.

In einer bevorzugten Ausführungsform enthält das randumlaufende Kunststoffmaterial (d) Einleger oder Gewinde-Inserts.

Unter Einleger sind zu verstehen Blecheinleger, die durch Umschäumen Möglichkeiten geben, zur Fixierung von Haltegriffen, Sonnenblenden, Lampen, Antennen und sonstigen im Dachmodul angebrachten Teilen.

Unter Gewinde-Inserts sind zu verstehen Gewindebuchsen, die durch Einbindung in die Polymermatrix Möglichkeiten zur Fixierung von Haltegriffen, Sonnenblenden, Lampen, Antennen und sonstigen im Dachmodul angebrachten Teilen bieten.

Weiter besteht die Möglichkeit Dome auszuformen, die keine Einleger oder Gewinde-Inserts enthalten. In diese kann dann mit herkömmlichen Schnellbauschrauben geschraubt und dadurch bereits genannte Teile befestigt werden.

Zusätzlich zu dem randumlaufenden Kunststoffmaterial (d) kann dieses auch punktuell auch auf weitere geeignete freiliegende Bereiche der Materiallage (b) aufgebracht werden, um punktuelle Verstärkungspunkte bereitzustellen. Auch ist der Aufbau von Quer- oder Längsverstrebungen aus diesem insbesondere hochkompakten Material möglich.

Das erfindungsgemäße Dachmodul findet im allgemeinen zur Herstellung von Karosserieaußenteilen für Verkehrsmittel, wie Kraftfahrzeuge, Flugzeuge, Schiffe, und Schienenfahrzeuge, Verwendung, aber auch beispielsweise zur Herstellung von Kotflügel, Endkantenklappen und Kofferraumdeckeln.

Die Verfahren zur Herstellung der erfindungsgemäßen Dachmodule umfassen hierbei folgende Schritte:
A) Einbringen einer Außenhaut (a) in ein geöffnetes Werkzeug,
B) Aufbringen der Materiallage (b) auf die freiliegende Oberfläche der Außenhaut (a),
C) passgenaues Einbringen der vorgefertigten Spacer-Schicht (c) auf die freiliegende Oberfläche der Materiallage (b),
D) Aufbringen des randumlaufenden Kunststoffmaterials (d) auf die noch freiliegende Oberfläche der Materiallage (b) und
E) Schließen des Werkzeugs bei einer Werkzeugtemperatur im Bereich von 25 °C bis 140 °C für eine Zeitdauer von 1 min bis 10 min.

Das Kernmaterial der Spacer-Schicht (c) wird dabei vorzugsweise außerhalb des Werkzeugs mit einer Glasfasermatte umwickelt und entweder im Werkzeug oder außerhalb mit Polyurethansystemkomponenten besprüht. Selbstverständlich ist es auch möglich die Verfahrensschritte teilweise in und teilweise außerhalb des Werkzeugs durchzuführen. Insbesondere bietet sich hier die 4-Komponenten-Technik an, mit der maßgeschneidert gezielt gesprüht werden kann.

Besonders bevorzugt kann dabei der Verfahrensschritt C) modifiziert werden durch die in situ Verfahrensschritte der Herstellung von Spacer-Schicht (c) durch:
C1) Einbringen von Polyurethansystemkomponenten, die gegebenenfalls Glasfasern enthalten, in das Werkzeug auf die eingelegte Materiallage (b),
C2) Einbringen einer Kernschicht der Spacer-Schicht (c) in das Werkzeug auf die eingetragenen Polyurethansystemkomponenten,
C3) Einbringen von Polyurethansystemkomponenten, die gegebenenfalls Glasfasern enthalten, in das Werkzeug auf die eingelegte Kernschicht der Spacer-Schicht (c), und gegebenenfalls
E) Schließen des Werkzeugs und Reaktion der eingebrachten Polyurethansystemkomponenten zu einem Polyurethan, bevor das randumlaufende Kunststoffmaterial (d) nach Öffnen in das Werkzeug eingebracht wird und
D1) erneutes Schließen des Werkzeugs und Reaktion des randumlaufenden Kunststoffmaterials (d) nach dessen Einbringen.

Üblicherweise wird in Schritt (A) eine Außenhaut (a) in die Formunterhälfte eines Werkzeuges eingelegt oder im In-Mould-Coating-Verfahren eingebracht. Es ist bevorzugt, dass es sich hierbei um eine vorgeformte Außenhaut (a) handelt, das heißt die Außenhaut (a) weist bereits die Form des Werkzeuges auf. Das Vorformen kann durch übliche Vorformverfahren, beispielsweise durch Tiefziehen, insbesondere Vakuumtiefziehen, durchgeführt werden. Das Verformen entfällt selbstverständlich beim Einsatz des In-Mould-Verfahrens.

Im Schritt B) wird die Materiallage (b) vorzugsweise auf die freiliegende Oberfläche der Außenhaut (a) aufgesprüht.

Im Schritt C1) werden zunächst Polyurethansystemkomponenten in das Werkzeug auf die eingelegte Materiallage (b) eingebracht. Das Einbringen der Polyurethansystemkomponenten kann, wie auch in Schritt B) beispielsweise durch Handguss, durch Hochdruck- oder Niederdruckmaschinen mit mehreren Komponenten gleichzeitig oder zeitlich versetzt in offenen Werkzeugen durchgeführt werden. Geeignete PU-Verarbeitungsmaschinen sind handelsüblich erhältlich (beispielsweise Fa. Elastogran, Isotherm, Hennecke, Krauss Maffei u.a.).

Bei der Verarbeitung mit Polyurethan-Maschinen ist es auch vorteilhaft, wenn während der Verarbeitung die Vorlagebehälter unter vermindertem Druck stehen.

Nach dem Schritt (C1) wird im Schritt (C2) eine Kernschicht der Spacer-Schicht (c) in das Formwerkzeug auf die bereits eingetragenen Polyurethansystemkomponenten eingebracht.

Nach dem Einbringen des Kernmaterials der Spacer-Schicht (c) werden im erfindungsgemäßen Verfahren im Schritt (C3) erneut Polyurethansystemkomponenten in das Werkzeug auf das eingelegte Kernmaterial der Spacer-Schicht (c) eingebracht und gegebenenfalls anschließend wird im Schritt (D) das Werkzeug geschlossen und die Reaktion der eingebrachten Polyurethansystemkomponenten durchgeführt, wobei das Dachmodul zwei faserverstärkte Polyurethane enthält, in das die Spacer-Schicht (c)eingebettet ist.

Erfindungswesentlich ist, dass das Einbringen des Kernmaterials der Spacer-Schicht (c) im Schritt (C) derart erfolgt, dass der äußere Rand der Spacer-Schicht (c) einen Bereich der Materiallage (b) freilässt, der 2 % bis 70 %, insbesondere 10 % bis 25 % der Bauteilfläche umfasst.

Ferner ist es bevorzugt, dass zusätzlich zu den vorstehend angegebenen Abmessungen der äußere Rand der Spacer-Schicht (c) innerhalb des Dachmoduls so gewählt wird, dass er nicht in den Randbereich des Dachmoduls hineinragt.

Nach der Reaktion der Polyurethansystemkomponente und dem Öffnen des Werkzeugs oder alternativ vor dem Schließen des Werkzeugs wird das randumlaufende Kunststoffmaterial (d) auf die freiliegenden Bereiche der Materiallage (b) aufgebracht, wobei die bevorzugt eingesetzten Polyurethankomponenten gemeinsam mit den Polyurethankomponenten der Spacer-Schicht (c) oder in einem separaten Verfahrensschritt reagieren.

Aus verfahrenstechnischer Sicht ist es oft wünschenswert, wenn die Außenhaut (a) über die Abmessungen des erfindungsgemäßen Dachmoduls hinausreicht. In diesem Fall wird bevorzugt in einem separaten Verfahrensschritt die überstehende Außenhaut (a) vom resultierenden Dachmodul abgetrennt.

In einer bevorzugten Ausführungsform wird in den Schritten (C1) und (C2) mit dem Einbringen der Polyurethansystemkomponenten im Mittelbereich des Werkzeuges begonnen (Schussbeginn) zum Randbereich der Form aufgehört (Schussende), dies gewährleistet ein besonders vorteilhaftes Verdrängen der Luft unter der Außenhaut (a) zum Rand hin.

Die Temperatur des Werkzeugs beträgt vorzugsweise 25 bis 140 °C, weiter bevorzugt von 40 bis 120 °C. Bei der Umsetzung von Polyisocyanat-Polyadditionsprodukten wird eine Temperatur der Ausgangskomponenten von vorzugsweise 15 bis 50 °C, besonders bevorzugt 25 bis 40 °C bevorzugt. Die Aushärtung der Polyisocyanat-Polyadditionsprodukte erfolgt bevorzugt in einer Zeit von üblicherweise 1 bis 10 Minuten, besonders bevorzugt 2 bis 4 Minuten.

Die Erfindung soll durch nachfolgendes Beispiel veranschaulicht werden.

### Beispiel:

Als Außenhaut (a) wurde eine tiefgezogene, mehrschichtige, coextrudierte, thermoplastische Außenhaut (a) aus PMMA und ASA/PC verwendet.Außenhaut (a) Anschließend wurde die Außenhaut (a) in ein geöffnetes Werkzeug im Werkzeugunterteil der PUR-Verarbeitungsanlage eingelegt, wobei das Werkzeugunterteil auf ca. 30 °C temperiert war.

Im Anschluss daran wurde als Materiallage (b) eine Funktionssprühschicht (Multitec^{®}) ganzflächig in einer Dicke von 0,5 mm bis 1,0 mm auf die freiliegende Oberfläche der Außenhaut (a) aufgebracht.

Anschließend wurde eine auf beiden Seiten mit Glasfasern beschichtete und mit Polyurethanreaktionsgemisch besprühte Schicht (Dicke 10 mm) des Kernmaterials der Spacer-Schicht (c) eingelegt.

Im Anschluss daran wurde der Randbereich mit dem Kunststoffmaterial (d), hier ebenfalls Glasfaser verstärktes Polyurethanreaktionsgemisch versehen und das Dachmodul ausgehärtet.

In Beispiel 1 erfolgte der Eintrag der Pappwabe derart, dass ein BauteilAußenhaut (a) mit einem Randbereichanteil von ca. 15 % entstand.

Als PUR-Systeme wurden Multitec^{®} und Baydur^{®} STR/Baypreg^{®} F, sowie daraus resultierende Entwicklungssysteme eingesetzt. Als Verstärkungsmaterial wurden Glasfasermatten (im Bereich des Spacers) sowie Schnittglas (im Bereich des Randes) mit einem Glasanteil von ca. 40 % verwendet. Nach Beendigung des Eintrags der PUR benetzten Glasfasern wurde das Werkzeug für eine Zeit von ca. 240 sec geschlossen. Nach Ablauf der Reaktionszeit wurde das Werkzeug geöffnet und das hergestellte Bauteil entformt und die überstehende Außenhaut (a) entfernt.

Eine optische Überprüfung der resultierenden Bauteile zeigte eine Class-A-Oberfläche der Außenhaut (a).

## Patentansprüche

1. Dachmodul für Fahrzeuge mit
einer Außenhaut (a), die eine Kunststofffolie, Metallfolie oder eine In-Mould-Coating-Beschichtung umfasst
einer an die Außenhaut (a) ganzflächig anschließenden Materiallage (b), deren Temperaturausdehnungskoeffizient sich von der Außenhaut (a) unterscheidet und derart gewählt ist, dass eine Deformation des Verbundes bei einer Temperaturänderung im Bereich von -20 °C bis +80 °C im Wesentlichen unterbleibt,
einer an die Materiallage (b) anschließenden Spacer-Schicht (c) mit einem Kernmaterial, das auf einer oder beiden Hauptoberflächen mit einer Faserverstärkten Polyurethanschicht bedeckt ist,
wobei
die Materiallage (b) randumlaufend auf der der Außenhaut (a) abgewandten Hauptoberfläche frei von der Spacer-Schicht (c) und der randumlaufende Bereich mit einem faserverstärkten Kunststoffmaterial (d) bedeckt ist.

2. Dachmodul nach Anspruch 1, **dadurch gekennzeichnet, dass** die Außenhaut (a) eine gegebenenfalls coextrudierte Folie mit einer Spacer-Schicht aus Polycarbonat oder Acrylnitril-Butadien-Styrol (ABS) und einer Oberflächenschicht aus Polymethylmethacrylat (PMMA) oder eine Monofolie aus ABS umfasst.

3. Dachmodul nach Anspruch 1 oder 2, **dadurch gekennzeichnet, dass** die Dicke der Außenhaut (a) 0,2 mm bis 5 mm, insbesondere 0,5 mm bis 1,5 mm beträgt.

4. Dachmodul nach einem der Ansprüche 1 bis 3, **dadurch gekennzeichnet, dass** die Materiallage (b) einen Elastizitätsmodul von 0,5 MPa bis 50 MPa und/oder eine Dicke von 0,3 mm bis 6 mm aufweist.

5. Dachmodul nach einem der Ansprüche 1 bis 4, **dadurch gekennzeichnet, dass** das Kernmaterial der Spacer-Schicht (c) expandiertes Kunststoffmaterial, insbesondere Schaumstoff, Metall, insbesondere Aluminium oder Naturwerkstoffe, insbesondere Holz, Pappe, Papier, tierische und/oder pflanzliche Faser umfasst.

6. Dachmodul nach Anspruch 5, **dadurch gekennzeichnet, dass** das Kernmaterial der Spacer-Schicht (c) Papierwaben, insbesondere mit einer Wabengröße von 4 mm bis 12 mm umfasst.

7. Dachmodul nach Anspruch 4 oder 5, **dadurch gekennzeichnet, dass** die als Kernmaterial verwendeten Papier- oder Pappwaben auf beiden Seiten mit einer Glasfaserschicht versehen sind, wobei die Glasfaserschicht jeweils eine Dicke von 0,01 mm bis 2 mm, insbesondere von 0,1 mm bis 1 mm aufweist, die mit einem Polyurethanpolymer getränkt ist.

8. Dachmodul nach einem der Ansprüche 1 bis 7, **dadurch gekennzeichnet, dass** die Spacer-Schicht (c) eine Dicke im Bereich von 4 mm bis 30 mm aufweist.

9. Dachmodul nach einem der Ansprüche 1 bis 8, **dadurch gekennzeichnet, dass** das randumlaufende Kunststoffmaterial (d) glasfaserverstärktes Polyurethanpolymer umfasst.

10. Dachmodul nach einem der Ansprüche 1 bis 9, **dadurch gekennzeichnet, dass** das randumlaufende Kunststoffmaterial (d) eine Dicke im Bereich von 3 mm bis 40 mm aufweist.

11. Dachmodul nach einem der Ansprüche 1 bis 10, **dadurch gekennzeichnet, dass** das randumlaufende Kunststoffmaterial (d) 2 bis 70 %, insbesondere 10 bis 25 % der Fläche der Materiallage (b) bedeckt.

12. Dachmodul nach einem der Ansprüche 1 bis 11, **dadurch gekennzeichnet, dass** die Dicke der Spacer-Schicht (c) der Dicke des randumlaufenden Kunststoffmaterials (d) entspricht.

13. Verfahren zur Herstellung eines Dachmoduls nach einem der Ansprüche 1 bis 12, **dadurch gekennzeichnet, dass** man
die Außenhaut (a) in ein geöffnetes Werkzeug einbringt,
die Materiallage (b) auf die freiliegende Oberfläche der Außenhaut (a) aufbringt,
die vorgefertigte Spacer-Schicht (c) passgenau auf die freiliegende Oberfläche der Materiallage (b) einbringt,
das randumlaufende Kunststoffmaterial (d) auf die noch freiliegende Oberfläche der Materiallage (b) aufbringt,
das Werkzeug schließt und
das Reaktionsgemisch bei einer Werkzeugtemperatur von 25 °C bis 140 °C innerhalb einer Zeit von 1 min bis 10 min aushärtet.

14. Verfahren nach Anspruch 13, **dadurch gekennzeichnet, dass** man das Werkzeug schließt und das Reaktionsgemisch bei einer Werkzeugtemperatur von 25 °C bis 140 °C innerhalb einer Zeit von 1 min bis 10 min aushärtet, bevor man das randumlaufende Kunststoffmaterial (d) auf die noch freiliegende Oberfläche der Materiallage (b) aufbringt.

## Claims

1. Roof module for vehicles, with
an outer skin (a), which comprises a plastic sheet, metal foil or an in-mould coating
a layer of material (b), which is adjacent to the outer skin (a) over its full surface area and has a coefficient of thermal expansion that differs from the outer skin (a) and is chosen so as to avoid substantially deformation of the composite when there is a change in temperature in the range from -20°C to +80°C,
a spacer layer (c), which is adjacent to the layer of material (b) and has a core material which is covered on one or both main surfaces by a fibre-reinforced polyurethane layer,
wherein
the layer of material (b) is free from the spacer layer (c) around the periphery of the main surface facing away from the outer skin (a) and the region around the periphery is covered by a fibre-reinforced plastics material (d).

2. Roof module according to Claim 1, **characterized in that** the outer skin (a) comprises a possibly coextruded sheet with a spacer layer of polycarbonate or acrylonitrile-butadiene-styrene (ABS) and a surface layer of polymethylmethacrylate (PMMA) or a monosheet of ABS.

3. Roof module according to Claim 1 or 2, **characterized in that** the thickness of the outer skin (a) is 0.2 mm to 5 mm, in particular 0.5 mm to 1.5 mm.

4. Roof module according to one of Claims 1 to 3, **characterized in that** the layer of material (b) has a modulus of elasticity of 0.5 MPa to 50 MPa and/or a thickness of 0.3 mm to 6 mm.

5. Roof module according to one of Claims 1 to 4, **characterized in that** the core material of the spacer layer (c) comprises expanded plastics material, in particular foam, metal, in particular aluminium or natural materials, in particular wood, paperboard, paper, animal and/or vegetable fibres.

6. Roof module according to Claim 5, **characterized in that** the core material of the spacer layer (c) comprises paper honeycombs, in particular with a honeycomb size of 4 mm to 12 mm.

7. Roof module according to Claim 4 or 5, **characterized in that** the paper or paperboard honeycombs used as core material are provided on both sides with a glass fibre layer, the glass fibre layer respectively having a thickness of from 0.01 mm to 2 mm, in particular from 0.1 mm to 1 mm, which is impregnated with a polyurethane polymer.

8. Roof module according to one of Claims 1 to 7, **characterized in that** the spacer layer (c) has a thickness in the range from 4 mm to 30 mm.

9. Roof module according to one of Claims 1 to 8, **characterized in that** the peripheral plastics material (d) comprises glass-fibre-reinforced polyurethane polymer.

10. Roof module according to one of Claims 1 to 9, **characterized in that** the peripheral plastics material (d) has a thickness in the range from 3 mm to 40 mm.

11. Roof module according to one of Claims 1 to 10, **characterized in that** the peripheral plastics material (d) covers 2 to 70%, in particular 10 to 25%, of the surface area of the layer of material (b).

12. Roof module according to one of Claims 1 to 11, **characterized in that** the thickness of the spacer layer (c) corresponds to the thickness of the peripheral plastics material (d).

13. Method for producing a roof module according to one of Claims 1 to 12, **characterized in that**
the outer skin (a) is introduced into an open mould,
the layer of material (b) is applied to the exposed surface of the outer skin (a),
the prefabricated spacer layer (c) is introduced in register onto the exposed surface of the layer of material (b),
the peripheral plastics material (d) is applied to the still exposed surface of the layer of material (b),
the mould is closed and
the reaction mixture is cured at a mould temperature of from 25°C to 140°C within a time of from 1 minute to 10 minutes.

14. Method according to Claim 13, **characterized in that** the mould is closed and the reaction mixture is cured at a mould temperature of from 25°C to 140°C within a time of from 1 minute to 10 minutes before the peripheral plastics material (d) is applied to the still exposed surface of the layer of material (b).

## Revendications

1. Module de toit pour des véhicules, avec
- une peau extérieure (a), qui comprend un film de matière plastique, un film de métal ou un revêtement formé par revêtement dans le moule,
- une couche de matériau (b) se raccordant en pleine surface à la peau extérieure (a), dont le coefficient de dilatation thermique est différent de celui de la peau extérieure (a) et qui est choisi de telle manière qu'il ne se produise essentiellement pas de déformation du composite lors d'une variation de température dans la plage de -20°C à +80°C,
- une couche d'écartement (c) se raccordant à la couche de matériau (b) avec un matériau de noyau qui est recouvert, sur une ou sur les deux surfaces principales, d'une couche de polyuréthane renforcée par des fibres,
dans lequel
la couche de matériau (b) est libre de la couche d'écartement (c) sur le bord périphérique sur la surface principale située à l'opposé de la peau extérieure (a), et la zone de bord périphérique est recouverte avec un matériau de matière plastique renforcé par des fibres (d).

2. Module de toit selon la revendication 1, **caractérisé en ce que** la peau extérieure (a) comprend un film éventuellement co-extrudé avec une couche d'écartement en polycarbonate ou en acrylonitrile-butadiène-styrène (ABS) et une couche de surface en polyméthacrylate de méthyle (PMMA) ou un film unique en ABS.

3. Module de toit selon la revendication 1 ou 2, **caractérisé en ce que** l'épaisseur de la peau extérieure (a) vaut 0,2 mm à 5 mm, en particulier 0,5 mm à 1,5 mm.

4. Module de toit selon l'une quelconque des revendications 1 à 3, **caractérisé en ce que** la couche de matériau (b) présente un module d'élasticité de 0,5 MPa à 50 MPa et/ou une épaisseur de 0,3 mm à 6 mm.

5. Module de toit selon l'une quelconque des revendications 1 à 4, **caractérisé en ce que** le matériau de noyau de la couche d'écartement (c) comprend un matériau de matière plastique expansé, en particulier une mousse, un métal, en particulier de l'aluminium, ou des substances naturelles, en particulier du bois, du carton, du papier, des fibres animales et/ou végétales.

6. Module de toit selon la revendication 5, **caractérisé en ce que** le matériau de noyau de la couche d'écartement (c) comprend des nids d'abeilles en papier, en particulier avec des alvéoles d'une grandeur de 4 mm à 12 mm.

7. Module de toit selon la revendication 4 ou 5, **caractérisé en ce que** les nids d'abeilles en papier ou en carton utilisés comme matériau de noyau sont munis sur les deux côtés d'une couche de fibres de verre, dans lequel la couche de fibres de verre présente respectivement une épaisseur de 0,01 mm à 2 mm, en particulier de 0,1 mm à 1 mm, qui est imprégnée d'un polymère de polyuréthane.

8. Module de toit selon l'une quelconque des revendications 1 à 7, **caractérisé en ce que** la couche d'écartement (c) présente une épaisseur comprise entre 4 mm et 30 mm.

9. Module de toit selon l'une quelconque des revendications 1 à 8, **caractérisé en ce que** le matériau de matière plastique (d) du bord périphérique comprend un polymère de polyuréthane renforcé par des fibres de verre.

10. Module de toit selon l'une quelconque des revendications 1 à 9, **caractérisé en ce que** le matériau de matière plastique (d) du bord périphérique présente une épaisseur comprise entre 3 mm et 40 mm.

11. Module de toit selon l'une quelconque des revendications 1 à 10, **caractérisé en ce que** le matériau de matière plastique (d) du bord périphérique recouvre 2 à 70 %, en particulier 10 à 25 % de la surface de la couche de matériau (b).

12. Module de toit selon l'une quelconque des revendications 1 à 11, **caractérisé en ce que** l'épaisseur de la couche d'écartement (c) correspond à l'épaisseur du matériau de matière plastique (d) du bord périphérique.

13. Procédé de fabrication d'un module de toit selon l'une quelconque des revendications 1 à 12, **caractérisé en ce que**
- on introduit la peau extérieure (a) dans un outil ouvert,
- on dépose la couche de matériau (b) sur la surface libre de la peau extérieure (a),
- on introduit la couche d'écartement préfabriquée (c) de façon précise sur la surface libre de la couche de matériau (b),
- on dépose le matériau de matière plastique (d) du bord périphérique sur la surface encore libre de la couche de matériau (b),
- on ferme l'outil, et
- on durcit le mélange de réaction sous une température d'outil de 25°C à 140°C pendant une durée de 1 min à 10 min.

14. Procédé selon la revendication 13, **caractérisé en ce que** l'on ferme l'outil et on durcit le mélange de réaction sous une température d'outil de 25°C à 140°C en une durée de 1 min à 10 min, avant de déposer le matériau de matière plastique (d) du bord périphérique sur la surface encore libre de la couche de matériau (b).
